(19) Europäisches Patentamt
European Patent Office
Office européen des brevets

(11) EP 3 780 016 A1

(12) EUROPEAN PATENT APPLICATION
published in accordance with Art. 153(4) EPC

(43) Date of publication:
17.02.2021 Bulletin 2021/07

(51) Int Cl.:
H01B 7/02 (2006.01)  H01B 7/17 (2006.01)
H01B 9/02 (2006.01)  H01B 13/00 (2006.01)
H01B 13/06 (2006.01)  H01B 3/30 (2006.01)

(21) Application number: 19831482.5

(22) Date of filing: 04.06.2019

(86) International application number:
PCT/KR2019/006715

(87) International publication number:
WO 2020/009334 (09.01.2020 Gazette 2020/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.07.2018 KR 20180077046

(71) Applicant: LS Cable & System Ltd.
Anyang-si, Gyeonggi-do 14119 (KR)

(72) Inventors:
• CHO, Young Eun
Seoul 07420 (KR)
• RYU, Ik Hyun
Anyang-Si Gyeonggi-do 13924 (KR)
• KIM, Young Ho
Gumi-Si Gyeongsangbuk-do 39205 (KR)

(74) Representative: advotec.
Patent- und Rechtsanwälte
Widenmayerstrasse 4
80538 München (DE)

(54) POWER CABLE

(57) Provided is a power cable including an insulating layer that is environmentally friendly and has high heat resistance and mechanical strength and excellent cold resistance, flexibility, bendability, impact resistance, installability, workability, etc., which are in a trade-off relationship with the physical properties.

Fig. 1

EP 3 780 016 A1

**Description**

TECHNICAL FIELD

The present invention relates to a power cable. Specifically, the present invention relates to a power cable including an insulating layer that is environmentally friendly and has high heat resistance and mechanical strength and excellent cold resistance, flexibility, bendability, impact resistance, installability, workability, etc., which are in a trade-off relationship with the physical properties.

BACKGROUND ART

Generally, a power cable may include a conductor and an insulating layer surrounding the conductor, and further include an inner semiconducting layer between the conductor and the insulating layer, an outer semiconducting layer surrounding the insulating layer, a sheath layer surrounding the outer semiconducting layer, and the like.

In recent years, as the demand for electrical power has increased, the development of high-capacity cables has been required. To this end, an insulating material is needed to form an insulating layer having excellent mechanical and electrical properties.

Generally, a crosslinked polyolefin polymer such as polyethylene, ethylene/propylene elastic copolymer (EPR), or ethylene/propylene/diene copolymer (EPDM) has been used as a base resin of the insulating material. This is because such a general crosslinked resin maintains excellent flexibility, satisfactory electrical and mechanical strength, etc. even at high temperatures.

However, because crosslinked polyethylene (XLPE) or the like used as the base resin of the insulating material is in a crosslinked form, when the lifespan of a cable or the like including an insulating layer formed of a resin such as XLPE ends, the resin of the insulating layer cannot be recycled and should be disposed by incineration and thus is not environmentally friendly.

When polyvinyl chloride (PVC) is used as a material of a sheath layer, PVC is difficult to separate from the crosslinked polyethylene (XLPE) constituting the insulating material or the like and is not environmentally friendly because toxic chlorinated substances are generated during incineration.

Non-crosslinked high-density polyethylene (HDPE) or low-density polyethylene (LDPE) is environmentally friendly, because a resin of an insulating layer formed thereof is recyclable when the lifespan of a cable including the insulating layer ends, but is inferior to XLPE in terms of heat resistance and thus is of limited use due to low operating temperatures thereof.

A polypropylene resin, which is environmentally friendly, may be used as a base resin, because a polymer thereof has a melting point of 160 °C or higher and thus the polypropylene resin is excellent in heat resistance without being crosslinked. However, the polypropylene resin has insufficient cold resistance, flexibility, bendability and the like due to high rigidity and thus has low workability during laying of a cable including an insulating layer formed thereof and is of limited use.

Therefore, there is an urgent need for a power cable which is environmentally friendly, is inexpensive to manufacture, and satisfies not only heat resistance and mechanical strength but also cold resistance, flexibility, bendability, impact resistance, installability, workability, etc. which are in trade-off with heat resistance and mechanical strength.

DETAILED DESCRIPTION OF THE INVENTION

TECHNICAL PROBLEM

The present invention is directed to providing an eco-friendly power cable.

The present invention is also directed to providing a power cable satisfying not only heat resistance and mechanical strength but also cold resistance, flexibility, bendability, impact resistance, installability, workability, etc. which are in trade-off with heat resistance and mechanical strength.

TECHNICAL SOLUTION

According to an aspect of the present invention, provided is a power cable comprising: a conductor; an inner semiconducting layer surrounding the conductor; and an insulating layer surrounding the inner semiconducting layer and formed of an insulating composition comprising, as a base resin, a polypropylene resin or a heterophasic polypropylene resin, wherein a brittle temperature $T_b$ defined by the following Equation 1 is -35 °C or less:

[Equation 1]

$$T_b = T_h + \Delta T [ (S/100) - (1/2) ],$$

wherein $T_h$ represents a highest temperature (°C) at which all five samples collected from an insulating layer of a cable including a base resin were broken or cracks observable with the naked eye occurred on surfaces of all the five samples, when the five samples were left at 23 °C for forty hours or more under a relative humidity of 50% according to ASTM D746 and thereafter were left at each temperature for 2.5 to 3.5 minutes while increasing or reducing the temperature by 5 °C, starting from - 40 °C, and surfaces of the samples were struck using a striking edge at a rate of 1800 to 2200 mm/s in a direction of 90 degrees, the five samples each having a length of 36.0 mm to 40.0 mm, a width of 5.6 mm to 6.4 mm, and a thickness of 1.8 mm to 2.2 mm; $\Delta T$ represents a constant temperature interval by which each temperature is changed during an experiment conducted at each temperature according to ASTM D746; and S represents the sum of percentages of samples that were broken or in which cracks observable with the naked eye occurred among the five samples in the experiment conducted to $T_h$ from a lowest temperature (°C) at which any one of the five samples were not broken or cracks observable with the naked eye did not occur in all the five samples, as a result of conducting the experiment as described above while increasing or reducing the temperature by $\Delta T$ according to ASTM D746, starting from -40 °C.

According to another aspect of the present invention, provided is the power cable, wherein a xylene insolubility defined by the following Equation 2 is 10% or less:

[Equation 2]

$$\text{xylene insolubility} = (\text{mass of insulating sample after}$$

$$\text{eluted with xylene solvent/mass of insulating sample before}$$

$$\text{eluted}) \times 100,$$

wherein the mass of insulating sample after eluted with xylene solvent represents the mass of an insulating sample, measured when 0.3 grams of an insulating sample was immersed into a xylene solvent, heated at 150 °C or higher for six hours, cooled to room temperature, taken out of the xylene solvent, dried in an oven at 150 °C for four hours, and cooled to room temperature.

According to other aspect of the present invention, provided is the power cable, wherein the brittle temperature $T_b$ is in a range of -80 to -35 °C.

According to other aspect of the present invention, provided is the power cable, wherein the insulating sample formed of the insulating composition has a flexural modulus of 50 to 1,200 MPa, measured at room temperature according to standard ASTM D790.

According to other aspect of the present invention, provided is the power cable, wherein a thickness of the insulating layer of the power cable is 5.5 to 84.0 times $t_{min}$ expressed in the following Equation 3:

[Equation 3]

$$t_{min} = 2.5 \text{ Uo/breakdown electric field for insulating samples,}$$

wherein Uo represents a reference voltage in a voltage test according to standard IEC 60840, and the breakdown electric field for insulating sample represents an electric field (kV/mm) according to a voltage applied when a probability of dielectric breakdown of the insulating samples is 63.2% when electrodes are brought into contact with both ends of each of the insulating samples and a voltage is applied thereto.

According to other aspect of the present invention, provided is the power cable, wherein, in the heterophasic polypropylene resin, rubbery propylene copolymer is dispersed in a crystalline polypropylene matrix.

According to other aspect of the present invention, provided is the power cable, wherein the crystalline polypropylene matrix comprises at least one of a propylene homopolymer and a propylene copolymer.

According to other aspect of the present invention, provided is the power cable, wherein the rubbery propylene copolymer comprises at least one comonomer selected from the group consisting of ethylene and $C_{4-12}$ alpha-olefins such as 1-butene, 1-pentene, 4-methyl-1-pentene, 1-hexene, 1-heptene, 1-octene, and the like.

According to other aspect of the present invention, provided is the power cable, wherein the heterophasic polypropylene resin has a melting point Tm of 140 to 170 °C and a melting enthalpy of 20 to 85 J/g, which are measured a differential scanning calorimeter (DSC).

According to other aspect of the present invention, provided is the power cable, wherein tensile strength is in a range of 0.7 to 3.0 kgf/mm² and Shore D hardness is in a range of 25 to 70 at a point at which an elongation is 5% when a tensile force is applied to a sample having a thickness of 1 mm at a rate of 200 mm/min, the sample being prepared by preheating the base resin at 180 °C for ten minutes, pressurizing the base resin to 20 MPa for ten minutes and then cooling the base resin.

According to other aspect of the present invention, provided is the power cable, further comprising 0.1 to 0.5 parts by weight of a nucleating agent, based on 100 parts by weight of the base resin.

According to other aspect of the present invention, provided is the power cable, further comprising 1 to 10 parts by weight of insulating oil, based on 100 parts by weight of the base resin.

According to other aspect of the present invention, provided is the power cable, further comprising 0.001 to 10% by weight of at least one additive selected from the group consisting of an antioxidant, an impact aid, a heat stabilizer, a nucleating agent and an acid scavenger, based on the total weight thereof.

According to other aspect of the present invention, provided is the power cable, wherein the base resin comprises 30 to 70 parts by weight of a polypropylene resin A and 70 to 30 parts by weight of a heterophasic polypropylene resin B, based on 100 parts by weight of the base resin, wherein in the heterophasic polypropylene resin B, a propylene copolymer is dispersed in a polypropylene matrix.

According to other aspect of the present invention, provided is the power cable, wherein the polypropylene resin A satisfying all of the following conditions a) to i):

    a) a density of 0.87 to 0.92 g/cm³, measured according to ISO 11883;
    b) a melt flow rate (MFR) of 1.7 to 1.9 g/10 min, measured at 230 °C and under a load of 2.16 kg according to ISO 1133;
    c) a tensile modulus of elasticity of 930 to 980 MPa, measured at a tension speed of 1 mm/min;
    d) a tensile stress at yield of 22 to 27 MPa, measured at a tension speed of 50 mm/min;
    e) a tensile strain at yield of 13 to 15%, measured at a tension speed of 50 mm/min;
    f) Charpy impact strength of 1.8 to 2.1 kJ/m² at 0 °C and 5.5 to 6.5 kJ/m² at 23 °C;
    g) a heat deflection temperature of 6.8 to 7.2 °C, measured at 0.45 MPa;
    h) a Vicat softening point of 131 to 136 °C, measured at 50 °C/h and 10 N according to standard A50; and
    i) Shore D hardness of 63 to 70, measured according to ISO 868.

According to other aspect of the present invention, provided is the power cable, wherein the heterophasic polypropylene resin B satisfies all of the following conditions a) to j :

    a) a density of 0.86 to 0.90 g/cm³, measured according to ISO 11883;
    b) a melt flow rate (MFR) of 0.1 to 1.0 g/10 min, measured at 230 °C and under a load of 2.16 kg according to ISO 1133;
    c) a tensile stress at break of 10 MPa or more, measured at a tension speed of 50 mm/min;
    d) a tensile strain at break of 450% or more, measured at a tension speed of 50 mm/min;
    e) flexural strength of 95 to 105 MPa;
    f) notched izod impact strength of 6.8 to 7.2 kJ/m² at - 40 °C;
    g) a heat deflection temperature of 38 to 42 °C, measured at 0.45 MPa;
    h) a Vicat softening point of 55 to 59 °C, measured at 50 °C/h and 10 N according to standard A50;
    i) Shore D hardness of 25 to 35, measured according to ISO 868; and
    j) a melting point 155 to 170 °C.

According to other aspect of the present invention, provided is the power cable, wherein the polypropylene resin A comprises a random propylene-ethylene copolymer containing an ethylene monomer in an amount of 1 to 10% by weight, based on the total weight of monomers, and the polypropylene matrix contained in the heterophasic polypropylene resin B comprises a propylene homopolymer.

According to other aspect of the present invention, provided is the power cable, wherein the propylene copolymer contained in the heterophasic polypropylene resin B comprises polypropylene-ethylene rubber (PER) particles containing 20 to 50% by weight of an ethylene monomer, based on the total weight of monomers.

According to other aspect of the present invention, provided is the power cable, wherein an amount of the propylene copolymer is 60 to 80% by weight, based on the total weight of the heterophasic polypropylene resin B.

According to other aspect of the present invention, provided is the power cable, wherein the heterophasic polypropylene resin B has a melting enthalpy of 15 to 40 J/g, measured by a differential scanning calorimeter (DSC).

ADVANTAGEOUS EFFECTS

A power cable according to the present invention is environmentally friendly and has high heat resistance and mechanical strength because a non-crosslinked propylene polymer is employed as a material of an insulating layer.
In addition, in the power cable according to the present invention, although an insulating layer formed of a propylene polymer having high rigidity is applied, excellent cold resistance, flexibility, bendability, impact resistance, installability, workability, etc. can be achieved by precisely controlling a material of an insulating layer and a brittle temperature thereof.

DESCRIPTION OF THE DRAWINGS

FIG. 1 is a schematic cross-sectional view of a power cable according to an embodiment of the present invention.
FIG. 2 is a schematic stepped cross-sectional view of the power cable of FIG. 1.

MODE OF THE INVENTION

Hereinafter, exemplary embodiments of the present invention will be described in detail. The present invention is, however, not limited thereto and may be embodied in many different forms. Rather, the embodiments set forth herein are provided so that this disclosure may be thorough and complete and fully convey the scope of the invention to those skilled in the art. Throughout the specification, the same reference numbers represent the same elements.

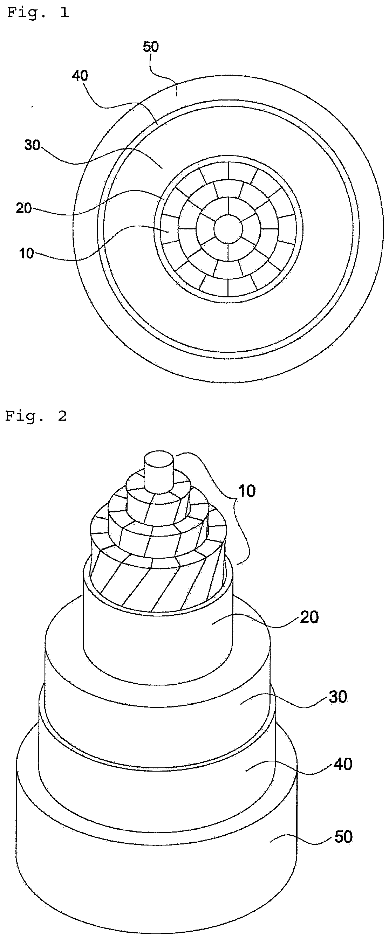

FIGS. 1 and 2 illustrate a cross sectional view of a power cable and a stepped cross-sectional view thereof according to an embodiment of the present invention, respectively.
As illustrated in FIGS. 1 and 2, the power cable according to the present invention may include a conductor 10 formed of a conductive material such as copper or aluminum, an insulating layer 30 surrounding the conductor 10 and formed of an insulating polymer or the like, an inner semiconducting layer 20 surrounding the conductor 10 and configured to remove an air layer between the conductor 10 and the insulating layer 30 and reduce local electric field concentration, an outer semiconducting layer 40 configured to shield the power cable and cause a uniform electric field to be applied to the insulating layer 30, a sheath layer 50 for protecting the power cable, and the like.
Specifications of the conductor 10, the insulating layer 30, the semiconducting layers 20 and 40, the sheath layer 50, and the like may vary according to a purpose of the power cable, a transmission voltage or the like, and materials of the insulating layer 30, the semiconducting layers 20 and 40, and the sheath layer 50 may be the same or different.
The conductor 10 may be formed of a plurality of stranded wires to improve cold resistance, flexibility, bendability, installability, workability, etc. of the power cable, and particularly include a plurality of conductor layers formed by arranging a plurality of wires in a circumferential direction of the conductor 10.
The insulating layer 30 of the power cable according to the present invention may be formed of an insulating composition including a homophasic polypropylene resin, a heterophasic polypropylene resin, or a non-crosslinked thermoplastic resin including both of them.
Here, the heterophasic polypropylene resin may include two or more resins with different phases, and particularly, a heterophasic polypropylene resin including both a crystalline resin and a rubbery resin, e.g., a blended resin of a crystalline polypropylene resin and a rubbery propylene copolymer or a heterophasic polypropylene resin in which a rubbery polypropylene copolymer is dispersed in a crystalline polypropylene matrix resin through polymerization of the crystalline polypropylene resin and the rubbery propylene copolymer.
Here, the homophasic polypropylene resin or the crystalline polypropylene (matrix) resin may include a propylene homopolymer and/or a propylene copolymer, preferably, the propylene homopolymer, and more preferably, only polypropylene homopolymer. The propylene homopolymer refers to polypropylene formed by polymerization of propylene contained in an amount of 99 wt% or more and preferably an amount of 99.5 wt% or more, based on the total weight of monomers.
The homophasic polypropylene resin or the crystalline polypropylene (matrix) resin may be polymerized in the presence of a general stereospecific Ziegler-Natta catalyst, a metallocene catalyst, a constrained geometry catalyst, another organometallic or coordination catalyst, and preferably, the Ziegler-Natta catalyst or the metallocene catalyst. Here, the metallocene is a generic term for bis(cyclopentadienyl) metal which is a new organometallic compound in which cyclopentadiene and a transition metal are combined in a sandwich structure, and a simplest general formula thereof is $M(C_5H_5)_2$ (here, M is Ti, V, Cr, Fe, Co, Ni, Ru, Zr, Hf or the like). Because the polypropylene polymerized in the presence of the metallocene catalyst has a low catalyst residual amount of about 200 to 700 ppm, it is possible to suppress or minimize a decrease in electrical properties of the insulating composition containing the polypropylene due to the low catalyst residual amount.

The rubbery propylene copolymer dispersed in the crystalline polypropylene matrix resin or blended with the crystalline polypropylene resin is substantially amorphous. The rubbery propylene copolymer may include at least one comonomer selected from the group consisting of ethylene and $C_{4-12}$ alpha-olefins such as 1-butene, 1-pentene, 4-methyl-1-pentene, 1-hexene, 1-heptene, or 1-octene.

The rubbery propylene copolymer may be monomeric propylene-ethylene rubber (PER) or propylene-ethylene diene rubber (EPDM).

In the present invention, the rubbery propylene copolymer may have a micro or nano particle size. The particle size of the rubbery propylene copolymer may ensure uniform dispersion of the rubbery propylene copolymer in the crystalline polypropylene matrix and improve impact strength of the insulating layer including the rubbery propylene copolymer. In addition, a risk of cracks initiated by the particles may reduce and a possibility that propagation of already formed cracks will stop may increase due to the particle size of the rubbery propylene copolymer.

Here, the heterophasic polypropylene resin may have a melting point Tm of 140 to 170 °C (measured by a differential scanning calorimeter (DSC)) and a melting enthalpy of 20 to 85 J/g (measured by the DSC).

When the melting enthalpy of the heterophasic polypropylene resin is less than 20 J/g, a crystal size may be small, a degree of crystallinity may be low, and heat resistance, mechanical strength and the like of the cable decrease, whereas when the melting enthalpy is greater than 85 J/g, the crystal size may be large, the degree of crystallinity may be high, and electrical characteristics of the insulating layer 30 may decrease.

Because the heterophasic polypropylene resin has a high melting point in spite of the non-crosslinked form thereof, the heterophasic polypropylene resin exhibits heat resistance sufficient to provide a power cable with an improved continuous workable temperature range and is environmentally friendly since it is recyclable due to the non-crosslinked form. In contrast, a general crosslinked resin is difficult to be recycled and thus is not environmentally friendly, and does not guarantee uniform productivity when crosslinking or scorching occurs early during formation of the insulating layer 30, thereby reducing long-term extrudability.

In the present invention, the insulating composition used to form the insulating layer 30 may have not only high heat resistance and mechanical strength but also excellent cold resistance, flexibility, bendability, impact resistance, installability, workability, etc., which are in a trade-off relationship with these physical properties, by controlling a brittleness temperature $T_b$ of an insulating sample, which is formed of the insulating composition and defined by Equation 1, to be -35 °C or less, e.g., to be within a range of -80 to-35 °C.

[Equation 1]

$$T_b = T_h + \Delta T [(S/100) - (1/2)]$$

In Equation 1 above, $T_h$ represents a highest temperature (°C) at which all five samples, collected from an insulating layer of a cable including a base resin and each having a length of 36.0 mm to 40.0 mm, a width of 5.6 mm to 6.4 mm, and a thickness of 1.8 mm to 2.2 mm, were broken or cracks observable with the naked eye occurred on surfaces of all the five samples, when the five samples were left at 23 °C for forty hours or more under a relative humidity of 50% according to ASTM D746 and thereafter were left for 2.5 to 3.5 minutes while increasing or reducing the temperature by 5 °C, starting from -40 °C, and the surfaces of the samples were struck using a striking edge at a rate of 1800 to 2200 mm/s in a direction of 90 degrees; $\Delta T$ represents a constant temperature interval by which the temperature is changed during an experiment conducted at each temperature according to ASTM D746; and S represents the sum of percentages of samples that are broken or in which cracks observable with the naked eye occurred among the five samples in the experiment conducted to $T_h$ from a lowest temperature (°C) at which any one of the five samples were not broken or cracks observable with the naked eye did not occur in all the five samples, as a result of conducting the experiment as described above while increasing or reducing the temperature by $\Delta T$, e.g., 5 °C, according to ASTM D746, starting from -40 °C.

Here, the breakage of the samples may be understood to mean that the samples were broken into two or more pieces, and the cracks may be understood to mean that the samples were not broken but fissures or cracks occurred on the surfaces thereof.

Actually, an example of measuring and calculating the brittle temperature is as follows.

Three samples among the five samples were broken and one sample was cracked when a brittleness temperature test was conducted at -40 °C according to ASTM D746. Two samples were broken and no samples were cracked at -35 °C and no samples were broken and no samples were cracked at -30 °C when this test was conducted while increasing the temperature by 5 °C. Therefore, a lowest temperature at which any one of the five samples were not broken or cracks observable with the naked eye did not occur at any one of the five samples was -35 °C.

When the brittleness temperature test was conducted at - 40 °C according to ASTM D746 while reducing the temperature by 5 °C, four samples were broken and one sample was cracked, i.e., all the five samples were damaged. Therefore, a highest temperature at which all the five samples were broken or cracks observable with the naked eye occurred at all the five samples was -45 °C.

Based on the results of the test, the number of broken samples and the number of cracked samples at each temperature and a percentage of the number of damaged samples versus the total number of samples are as shown in Table 1 below, and the sum S of percentages is 220.

[Table 1]

| temperature (°C) | broken/cracked (number) | damaged (number) | percentage of number of damaged samples/total number of samples |
|---|---|---|---|
| -30 | 0/0 | 0 | (0/5)*100=0 |
| -35 | 2/0 | 2 | (2/5)*100=40 |
| -40 | 3/1 | 4 | (4/5)*100=80 |
| -45 | 4/1 | 5 | (5/5)*100=100 |
| Sum S of percentages=0+40+80+100=220 | | | |

Therefore, the brittle temperature $T_b (=T_h+\Delta T*[(S/100)-(1/2)])$ defined by Equation 1 is $-45+5*[(220/100)-(1/2)]=-36.5$ °C. Here, when the brittle temperature $T_b$ is less than - 80 °C, cold resistance is high but mechanical properties are insufficient and thus the cable is likely to be pressed down during manufacture or storage, thereby making it difficult to maintain the original shape of the cable, and therefore, electrical properties of the cable may greatly reduce; whereas cold resistance may greatly reduce when the brittle temperature $T_b$ is greater than -35 °C.

In the present invention, a xylene insolubility of an insulating sample formed of the insulating composition used to form the insulating layer 30 may be 10% or less, and a flexural modulus thereof at room temperature may be in a range of 50 to 1,200 MPa and preferably a range of 200 to 1,000 MPa (measured according to standard ASTM 3. D790).

Here, the xylene insolubility may be calculated by Equation 2 below.

[Equation 2]

xylene insolubility=(mass of insulating sample after eluted with xylene solvent/mass of insulating sample before eluted)×100

In Equation 2 above, "mass of insulating sample after eluted with xylene solvent" represents the mass of an insulating sample, measured when 0.3 grams of an insulating sample is immersed into a xylene solvent, heated at 150 °C or higher for six hours, cooled to room temperature, taken out of the xylene solvent, dried in an oven at 150 °C for four hours, and cooled to room temperature.

That is, the mass of the insulating sample after eluted in the xylene solvent corresponds to the total mass of a crystalline polypropylene matrix and other additives that are left after a rubbery polypropylene copolymer eluted with the xylene solvent is removed from the insulating sample. Thus, when the xylene insolubility exceeds 10%, i.e., when the amount of a crystalline portion in the insulating sample is excessive, the flexibility, cold resistance, installability, workability, etc. of the insulating layer 30 may greatly reduce.

The flexural modulus may be measured according to standard ASTM D790 by placing a cuboid insulating sample on two supports, applying a load to a midpoint on the insulating sample on the two supports, and measuring a load applied when surface rupture occurs or when a deformation rate is 5.0%. The heat resistance, mechanical properties, etc. of the insulating layer 30 may be insufficient when the flexural modulus of the insulating samples at room temperature is less than 50 MPa, whereas the flexibility, cold resistance, installability, workability, etc. thereof may significantly reduce when the flexural modulus of the insulating samples at room temperature is greater than 1,200 MPa.

In the present invention, on an assumption that the xylene insolubility and flexural modulus of the insulating composition used to form the insulating layer 30 satisfy the above-described ranges, the thickness of the insulating layer 30 may be precisely designed to be a×$t_{min}$. Here, a ranges from 5.5 to 84.0 and $t_{min}$ may be defined by Equation 3 below.

[Equation 3]

$$t_{min}=2.5 \text{ Uo/breakdown electric field for insulating sample}$$

In Equation 3 above, Uo represents a reference voltage in a voltage test according to standard IEC 60840, as shown in Table 2 below, and "breakdown electric field for insulating sample" represents an electric field (kV/mm) according to a voltage applied when a probability of dielectric breakdown occurring in a plurality of insulating samples, e.g., twenty insulating samples, which are collected from an insulating layer of a cable is 63.2% when electrodes are brought into contact with both ends of each of the plurality of insulating samples and a voltage is applied thereto.

[Table 2]

| 1 | 2 | 3 | 4[a] | 5[a] | 6[a] | 7[a] | 8[a] | 9[a] | 10[b] |
|---|---|---|---|---|---|---|---|---|---|
| Rated voltage $U$ | Highest voltage for equipment $U_m$ | Value of $U_0$ for determination of test voltages $U_0$ | Voltage test of 9.3 $2.5\,U_0$ | Partial discharge test of 9.2 and 12.4.4 $1.5\,U_0$ | Tan $\delta$ measurement of 12.4.5 $U_0$ | Heating cycle voltage test of 12.4.6 $2\,U_0$ | Lightning Impulse voltage test of 10.12, 12.4.7 and 13.2.5 | Voltage test of 12.4.7 $2.5\,U_0$ | Voltage test after Installation of 16.3 |
| kV | kV | kV | kV | kV | kV | kV | kV | kV | kV |
| 45 to 47 | 52 | 26 | 65 | 39 | 26 | 52 | 250 | 65 | 52 |
| 60 to 69 | 72.5 | 36 | 90 | 54 | 36 | 72 | 325 | 90 | 72 |
| 110 to 115 | 123 | 64 | 160 | 96 | 64 | 128 | 550 | 160 | 128 |
| 132 to 138 | 145 | 76 | 190 | 114 | 76 | 152 | 650 | 190 | 132 |
| 150 to 161 | 170 | 87 | 218 | 131 | 87 | 174 | 750 | 218 | 150 |

[a] If necessary, these test voltages shall be adjusted as stated in 12.4.1.
[b] If necessary these test voltages shall be adjusted as stated in 16.3.

In the present invention, when the thickness of the insulating layer 30 of the cable is greater than $a \times t_{min}$ described above, the thickness of the insulating layer 30 may be excessive, thus unnecessarily reducing the installability, workability, etc. of the cable, whereas when the thickness of the insulating layer 30 is less than $a \times t_{min}$, the dielectric strength of the insulating layer 30 may be insufficient, thus shortening the lifespan thereof due to dielectric breakdown.

In the present invention, the insulating composition used to form the insulating layer 30 may further include a nucleating agent. The nucleating agent may be a sorbitol-based nucleating agent. That is, the nucleating agent is a sorbitol-based nucleating agent, for example, 1,3:2,4-bis(3,4-dimethyldibenzylidene) sorbitol, bis(p-methyldibenzulidene) sorbitol, substituted dibenzylidene sorbitol, or a mixture thereof.

Due to the nucleating agent, curing of the non-crosslinked thermoplastic resin may be promoted even when not quenched in an extrusion process of the power cable, thus improving productivity of the power cable, a size of crystals generated during the curing of the non-crosslinked thermoplastic resin may be reduced to preferably 1 to 10 $\mu$m, thereby improving electrical properties of an insulating layer to be formed, and a plurality of crystallization sites of the crystals may be formed to increase crystallinity, thereby improving both heat resistance and mechanical strength of the insulating layer.

Because a melting point of the nucleating agent is high, the nucleating agent should be injected and extruded at a high temperature of about 230 °C, and it is preferable to use a combination of two or more sorbitol-based nucleating agents. When the combination of two or more different sorbitol-based nucleating agents are used, the expression of nucleating agents may be increased even at low temperatures.

The nucleating agent may be contained in an amount of 0.1 to 0.5 parts by weight, based on 100 parts by weight of the non-crosslinked thermoplastic resin. When the amount of the nucleating agent is less than 0.1 parts by weight, the heat resistance and electrical and mechanical strength of the non-crosslinked thermoplastic resin and the insulating layer including the same may reduce due to a large crystal size, e.g., a crystal size exceeding 10 □m and a non-uniform crystal distribution. When the amount of the nucleating agent is greater than 0.5 parts by weight, a surface interface area between the crystals and an amorphous portion of the resin may increase due to an extremely small crystal size, e.g., a crystal size of less than 1 □m, and thus, alternating-current (AC) dielectric breakdown (ACBD) characteristics, impulse characteristics, etc. of the non-crosslinked thermoplastic resin may decrease.

In the present invention, the insulating composition used to form the insulating layer 30 may further include insulating oil.

Mineral oil, synthetic oil, or the like may be used as the insulating oil. In particular, the insulating oil may be an aromatic oil composed of an aromatic hydrocarbon compound such as dibenzyl toluene, alkylbenzene, or alkyldiphenylethane, a paraffinic oil composed of a paraffinic hydrocarbon compound, a naphthenic oil composed of a naphthenic hydrocarbon compound, silicone oil, or the like.

An amount of the insulating oil may be 1 to 10 parts by weight, and preferably, 1 to 7.5 parts by weight, based on 100 parts by weight of the non-crosslinked thermoplastic resin. When the amount of the insulating oil is greater than 10 parts by weight, the insulating oil may be eluted during an extrusion process of forming the insulating layer 30 on the conductor 10, thus making it difficult to process the cable.

As described above, due to the insulating oil, the flexibility, bendability, etc. of the insulating layer 30 in which a polypropylene rein having relatively low flexibility due to high rigidity is employed as a base resin may be additionally improved, thereby facilitating laying of the power cable, and high heat resistance and mechanical and electrical properties of the polypropylene resin may be maintained or improved. Particularly, a reduction of processability of the polypropylene resin due to a slightly narrow molecular weight distribution when polymerized in the presence of a metallocene catalyst may be supplemented due to the insulating oil.

Furthermore, the insulating composition used to form the insulating layer 30 may include, as a base resin, a non-crosslinked thermoplastic resin, including a polypropylene resin A and a heterophasic resin B in which a propylene copolymer is dispersed in a polypropylene matrix.

The polypropylene resin A may include a propylene homopolymer and/or a propylene copolymer, and preferably, the propylene copolymer. The propylene homopolymer refers to polypropylene formed by polymerization of propylene contained in an amount of 99 wt% or more and preferably an amount of 99.5 wt% or more, based on the total weight of monomers.

The propylene copolymer may include propylene and ethylene or an $\alpha$-olefin having 4 to 12 carbon atoms, e.g., a copolymer selected from among 1-butene, 1-pentene, 4-methyl-1-pentene, 1-hexene, 1-octene, 1-decene, 1-dodecene, and a combination thereof, and preferably, a copolymer with ethylene. This is because hard and flexible properties may be achieved through copolymerization of propylene and ethylene.

The propylene copolymer may include a random propylene copolymer and/or a block propylene copolymer, preferably, the random propylene copolymer, and more preferably, only the random propylene copolymer. The random propylene copolymer refers to a propylene copolymer in which a propylene monomer and another olefin monomer are arbitrarily and alternately arranged. The random propylene copolymer is preferably a random propylene copolymer containing ethylene monomer in an amount of 1 to 10% by weight, preferably, 1 to 5% by weight, and more preferably, 3 to 4% by weight, based on the total weight of monomers.

Preferably, the random propylene copolymer may have a density of 0.87 to 0.92 g/cm$^3$ (measured according to ISO 11883), a melt flow rate (MFR) of 1.7 to 1.9 g/10 min (measured at 230 °C and under a load of 2.16 kg according to ISO 1133), tensile modulus of elasticity of 930 to 980 MPa (measured at a tension speed of 1 mm/min), tensile stress of 22 to 27 MPa (measured at a tension speed of 50 mm/min), tension strain of 13 to 15% (measured at a tension speed of 50mm/min), Charpy impact strength of 1.8 to 2.1 kJ/m$^2$ at 0 °C and 5.5 to 6.5 kJ/m$^2$ at 23 °C, a heat deflection temperature of 6.8 to 7.2 °C (measured at 0.45 MPa), a Vicat softening point of 131 to 136 °C (measured at 50 °C/h and 10N according to the standard A50), and Shore D hardness of 63 to 70(measured according to ISO 868).

The random propylene copolymer may improve mechanical strength, such as tensile strength, of the insulating layer 30 formed thereof, is suitable for transparent molded articles due to high transparency, and has a relatively high crystallization temperature Tc, thus reducing a time required to cool the insulating layer 30 after the extrusion of the insulating layer 30 to manufacture the cable. Therefore, the manufacturing yield of the cable can be improved, a shrinkage rate and thermal deformation of the insulating layer 30 can be minimized, and manufacturing costs of the cable can be reduced due to a relatively low unit price.

The polypropylene resin A may have a weight average molecular weight (Mw) of 200,000 to 450,000. Further, the polypropylene resin A may have a melting point Tm of 140 to 175 °C (measured by a differential scanning calorimeter (DSC)), a melting enthalpy of 50 to 100 J/g (measured by the DSC), flexural strength of 30 to 1,000 MPa and preferably 60 to 1,000 MPa at room temperature (measured according to ASTM D790).

The polypropylene resin A has a high melting point in spite of the non-crosslinked form thereof and exhibits heat resistance sufficient to provide a power cable with an improved continuous workable temperature range and is recyclable due to the non-crosslinked form and thus environmentally friendly. In contrast, a general crosslinked resin is difficult to be recycled and thus is not environmentally friendly, and does not guarantee uniform productivity when crosslinking or scorching occurs early during formation of the insulating layer 30, thereby reducing long-term extrudability.

In the heterophasic polypropylene resin B in which a propylene copolymer is dispersed in a polypropylene matrix, the polypropylene matrix may be the same as or different from the polypropylene resin A, preferably include a propylene homopolymer and more preferably only propylene homopolymer.

In the heterophasic polypropylene resin B, the propylene copolymer dispersed in the polypropylene matrix (hereinafter referred to as "dispersed propylene copolymer") is substantially amorphous. Here, the propylene copolymer should be understood to mean that the propylene copolymer has residual crystallinity with a melting enthalpy less than 10 J/g. The dispersed propylene copolymer may include at least one comonomer selected from the group consisting of ethylene and $C_{4-12}$ alpha-olefins such as 1-butene, 1-pentene, 4-methyl-1-pentene, 1-hexene, 1-heptene, 1-octene, etc.

An amount of the dispersed propylene copolymer may be 60 to 90% by weight and preferably 65 to 80% by weight, based on the total weight of the heterophasic polypropylene resin B. Here, the flexibility, bendability, impact resistance, cold resistance, etc. of the insulating layer 30 formed thereof may be insufficient when the amount of the dispersed propylene copolymer is less than 60% by weight, whereas the heat resistance, mechanical strength, etc. of the insulating layer 30 may be insufficient when the amount of the dispersed propylene copolymer is greater than 90% by weight.

The dispersed propylene copolymer may be propylene-ethylene rubber (PER) or propylene-ethylene diene rubber (EPDM) containing ethylene monomer in an amount of 20 to 50% by weight and preferably 30 to 40% by weight, based on the total weight of the monomers. The flexibility, bendability, and impact resistance of the insulating layer 30 formed thereof may be excellent and the cold resistance, etc. thereof may be insufficient when the amount of the ethylene monomer is less than 20% by weight, whereas the cold resistance, heat resistance, and mechanical strength of the insulating layer 30 may be excellent and the flexibility, etc. thereof may decrease when the amount of the ethylene monomer is greater than 50% by weight.

In the present invention, a particle size of the dispersed propylene copolymer may be 1 □m or less, preferably 0.9 □m or less, and more preferably 0.8 □m or less. The particle size of the dispersed propylene copolymer may ensure uniform dispersion of the propylene copolymer in the polypropylene matrix and improve the impact strength of the insulating layer 30 including the same. In addition, a risk of cracks initiated by particles thereof may reduce and a possibility that propagation of already formed cracks will stop may increase due to the particle size of the rubbery propylene copolymer.

Preferably, the heterophasic polypropylene resin B may have a melt flow rate (MFR) of 0.1 to 1.0 g/10 min and preferably 0.8 g/10 min, measured at 230 °C and under a load of 2.16 kg according to ISO 1133, tensile stress at break of 10 MPa or more, tensile strain at break of 450% or more, flexural strength of 95 to 105 MPa, notched izod impact strength of 6.8 to 7.2 kJ/m$^2$, measured at -40 °C, a heat deflection temperature 38 to 42 °C, measured at 0.45 MPa, a Vicat softening point of 55 to 59 °C, measured at 50 °C/h and 10N according to A50, Shore D hardness of 25 to 35, measured according to ISO 868, a melting point Tm of 155 to 170 °C, measured by a differential scanning calorimeter (DSC), and a melting enthalpy of 15 to 40 J/g, measured by the DSC.

A density of the heterophasic polypropylene resin B may be in a range of 0.86 to 0.90 g/cm$^3$ and preferably

0.88 g/cm$^3$, measured according to ISO 11883, and characteristics, e.g., impact strength and shrinkage property, of the insulating layer 30 may be influenced by the density of the heterophasic polypropylene resin B.

The heterophasic polypropylene resin B contains non-crosslinked polypropylene and thus is recyclable and environmentally friendly, may improve the heat resistance of the insulating layer 30 formed of a polypropylene matrix having excellent heat resistance, and improve a reduction of the cold resistance, flexibility, bendability, impact resistance, installability, workability, and the like of the insulating layer 30 due to the rigidity of the polypropylene resin A.

In particular, a ratio A:B between weights of the polypropylene resin A and the heterophasic polypropylene resin B may be 3:7 to 7:3 and preferably 5:5. The mechanical strength, such as tensile strength, of the insulating layer 30 may be insufficient when the weight ratio is less than 3:7, and the flexibility, bendability, impact resistance, cold resistance, etc. thereof may be insufficient when the weight ratio is greater than 7:3.

The non-crosslinked thermoplastic resin included in the insulating layer 30 of the power cable according to the present invention includes a combination of the polypropylene resin A exhibiting excellent heat resistance, mechanical strength, etc. and the heterophasic polypropylene resin B exhibiting excellent heat resistance, flexibility, bendability, impact resistance, cold resistance, installability, workability, etc. and the polypropylene resin A and the heterophasic polypropylene resin B are compatible with each other. Thus, excellent heat resistance and mechanical strength and excellent flexibility, bendability, impact resistance, cold resistance, installability, workability, etc., which are in a trade-off relationship with heat resistance and mechanical strength can be achieved.

In the present invention, the insulating layer 30 may additionally include other additives such as an antioxidant, an impact aid, a heat stabilizer, a nucleating agent, and an acid scavenger. The other additives may be contained in an amount of 0.001 to 10% by weight according to the types thereof, based on the total weight of the insulating layer 30.

The inner semiconducting layer 20 may include, as a base resin, a blended resin of the heterophasic polypropylene resin B in which the propylene copolymer is dispersed in the polypropylene matrix and another heterophasic resin B'. The heterophasic resin B' is also a heterophasic resin in which a propylene copolymer is dispersed in a polypropylene matrix, but the polypropylene matrix includes a propylene random copolymer and thus the heterophasic resin B' has a lower melting point and a higher melt flow rate (MFR) than those of the heterophasic polypropylene resin B. For example, the heterophasic resin B' may have a melting point of 140 to 150 °C and an MFR of 6 to 8 g/10 minutes, measured at 230 °C and under a load of 2.16 kg according to ISO 1133.

An amount of the heterophasic polypropylene resin B may be 50 to 80 parts by weight and an amount of the heterophasic resin B' may be 20 to 50 parts by weight, based on 100 parts by weight of the base resin. The inner semiconducting layer 20 may additionally include 35 to 70 parts by weight of carbon black, 0.2 to 3 parts by weight of an antioxidant, and the like.

When the amount of the heterophasic polypropylene resin B is less than 50 parts by weight and the amount of the heterophasic resin B' is greater than 50 parts by weight, the heat resistance and elongation of the inner semiconducting layer 20 greatly reduce. In contrast, when the amount of the heterophasic polypropylene resin B is greater than 80 parts by weight and the amount of the heterophasic resin B' is less than 20 parts by weight, the viscosity of the composition used to form the inner semiconducting layer 20 may increase and thus a screw load increases during extrusion, thereby greatly reducing workability.

When the amount of the carbon black is less than 35 parts by weight, semiconducting properties of the inner semiconducting layer 20 may not be achieved, whereas when the amount of the carbon black is greater than 70 parts by weight, the viscosity of the composition used to form the inner semiconducting layer 20 may increase and thus the screw load may increase during extrusion, thereby greatly reducing workability.

When the amount of the antioxidant is less than 0.2 parts by weight, it may be difficult to ensure long-term heat resistance of the power cable in a high-temperature environment, whereas when the amount of the antioxidant is greater than 3 parts by weight, semiconducting properties may decrease due to a blooming phenomenon in which the antioxidant is eluted in white from a surface of the inner semiconducting layer 20.

The outer semiconducting layer 40 may include, as a base resin, a blended resin of the heterophasic polypropylene resin B and an ethylene copolymer resin. The ethylene copolymer resin may include, for example, ethylene butyl acrylate (EBA), ethylene vinyl acetate (EVA), ethylene ethyl acrylate (EEA), ethylene methyl acrylate (EMA), or a combination thereof.

Here, the amount of the heterophasic polypropylene resin B may be 10 to 40 parts by weight and the amount of the ethylene copolymer resin may be 60 to 90 parts by weight, based on 100 parts by weight of the base resin, and 35 to 70 parts by weight of carbon black and 0.2 to 3 parts by weight of an antioxidant, and the like may be additionally included.

Here, when the amount of the heterophasic polypropylene resin B is less than 10 parts by weight and the amount of the ethylene copolymer resin is greater than 90 parts by weight, it may be difficult to secure heat resistance of the power cable in a high-temperature environment and the adhesion of the outer semiconducting layer 40 to the insulating layer 30 may greatly reduce. When the amount of the heterophasic polypropylene resin B is greater than 40 parts by weight and the amount of the ethylene copolymer resin is less than 60 parts by weight, the ease of separating the outer semiconducting layer 40 from the insulating layer 30 may greatly reduce.

When the amount of the carbon black is less than 35 parts by weight, the semiconducting properties of the outer semiconducting layer 20 may not be exhibited, whereas when the amount of the carbon black is greater than 70 parts by weight, the viscosity of the composition used to form the outer semiconducting layer 20 may increase and thus screw load may increase during extrusion, thereby greatly reducing workability.

When the amount of the antioxidant is less than 0.2 parts by weight, it may be difficult to ensure long-term heat resistance of the power cable in a high-temperature environment, whereas when the amount of the antioxidant is greater than 3 parts by weight, the blooming phenomenon in which the antioxidant may be eluted in white from the surface of the outer semiconducting layer 20 may occur, thereby reducing semiconducting properties.

[Examples]

1. Preparation example

Base resins each containing components at a ratio as shown in Table 3 below were preheated at 180 °C for ten minutes, pressurized to 20 MPa for ten minutes, and then cooled to prepare insulating samples. In addition, cable samples were each prepared by forming an insulating layer by extruding one of the base resins on a conductor. Units of the amounts shown in Table 3 below are wt%.

[Table 3]

|  | example 1 | example 2 | example 3 | example 4 | Comparative example 1 | comparative example 2 |
|---|---|---|---|---|---|---|
| resin A | 30 | 50 | 60 | 70 | 80 | 100 |
| resin B | 70 | 50 | 40 | 30 | 20 | 0 |
| - resin A: a polypropylene resin<br>- resin B: a heterophasic resin in which a propylene copolymer is dispersed in a polypropylene matrix | | | | | | |

2. Evaluation of physical properties

1) Evaluation of bendability

A sample as described above was prepared in a size of 100 mm×100 mm×3 mm (=width×length×thickness), and Shore D hardness was measured by selecting at least three points on the prepared sample.

In addition, samples as described above were each prepared in a size of 250 mm×250 mm×1 mm (=width×length×thickness), and a dumbbell sample was collected therefrom according to ASTM D638 and tensile strength at a point at which an elongation was 5% when a tensile force was applied to the dumbbell sample at a speed of 200 mm/min was measured to evaluate flexibility and bendability.

Here, it was evaluated that mechanical properties and flexibility and bendability, which are in a trade-off relationship with mechanical properties, were excellent when the tensile strength was in a range of 0.7 to 3.0 kgf/mm$^2$ and the Shore D hardness was in a range of 35 to 70. That is, it was evaluated that flexibility and bendability were excellent but mechanical strength greatly reduced when the tensile strength was less than 0.7 kgf/mm$^2$ and the Shore D hardness was less than 35, whereas flexibility and bendability greatly reduced when the tensile strength was greater than 3.0 kgf/mm$^2$ and the Shore D hardness was greater than 70.

2) Evaluation of cold resistance

The brittle temperature $T_b$ according to Equation 1 above was calculated by collecting five samples each having a length of 36.0 mm to 40.0 mm, a width of 5.6 mm to 6.4 mm, and a thickness 1.8 mm to 2.2 mm from the insulating layers of the cable samples, and conducting a brittleness temperature test(KS 3004) thereon according to ASTM D746, i.e., by leaving the samples at 23 °C and a relative humidity of 50% for forth hours or more, leaving the samples for 2.5 to 3.5 minutes at each temperature while increasing or decreasing the temperature by 5 °C, striking surfaces of the samples with a strike edge at a speed of 1800 to 2200 mm/s in a direction of 90 degrees while the samples were fixed with a force of 0.56 N·m, and observing whether the samples were broken or cracked.

A result of the evaluation of the physical properties is shown in Table 4 below.

[Table 4]

| | example 1 | example 2 | example 3 | example 4 | Comparative example 1 | Comparative example 2 |
|---|---|---|---|---|---|---|
| shore D hardness | 54.2 | 63.3 | 66.9 | 69.3 | 71.4 | 75.6 |
| tensile strength (Kgf/mm$^2$) | 0.82 | 1.93 | 2.36 | 2.99 | 3.43 | 4.42 |
| brittle temperature (°C) | -54.5 | -48.5 | -41.5 | -36.5 | -21.5 | -1.5 |

As shown in Table 4 above, it was confirmed that cold resistance, flexibility, bendability, and the like of examples 1 to 4 according to the present invention were appropriate and thus mechanical strength thereof was sufficient, whereas cold resistance of comparative examples 1 and 2 greatly reduced due to an inappropriate base resin and flexibility, bendability, and the like greatly reduced.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

**Claims**

1. An insulating composition comprising, as a base resin, a polypropylene resin or a heterophasic polypropylene resin, wherein a brittle temperature $T_b$ defined by the following Equation 1 is -35 °C or less:

[Equation 1]

$$T_b = T_h + \triangle T[(S/100)-(1/2)],$$

wherein $T_h$ represents a highest temperature (°C) at which all five samples collected from an insulating layer of a cable including a base resin were broken or cracks observable with the naked eye occurred on surfaces of all the five samples, when the five samples were left at 23 °C for forty hours or more under a relative humidity of 50% according to ASTM D746 and thereafter were left at each temperature for 2.5 to 3.5 minutes while increasing or reducing the temperature by 5 °C, starting from - 40 °C, and surfaces of the samples were struck using a striking edge at a rate of 1800 to 2200 mm/s in a direction of 90 degrees, the five samples each having a length of 36.0 mm to 40.0 mm, a width of 5.6 mm to 6.4 mm, and a thickness of 1.8 mm to 2.2 mm; ΔT represents a constant temperature interval by which each temperature is changed during an experiment conducted at each temperature according to ASTM D746; and S represents the sum of percentages of samples that were broken or in which cracks observable with the naked eye occurred among the five samples in the experiment conducted to $T_h$ from a lowest temperature (°C) at which any one of the five samples were not broken or cracks observable with the naked eye did not occur in all the five samples, as a result of conducting the experiment as described above while increasing or reducing the temperature by ΔT according to ASTM D746, starting from -40 °C, and
a xylene insolubility defined by the following Equation 2 is 10% or less:

[Equation 2]

$$\text{xylene insolubility}=(\text{mass of insulating sample after}$$

$$\text{eluted with xylene solvent/mass of insulating sample before}$$

$$\text{eluted})\times 100,$$

wherein the mass of insulating sample after eluted with xylene solvent represents the mass of an insulating sample, measured when 0.3 grams of an insulating sample was immersed into a xylene solvent, heated at 150 °C or higher for six hours, cooled to room temperature, taken out of the xylene solvent, dried in an oven at 150 °C for four hours, and cooled to room temperature.

2. The insulating composition of claim 1, wherein the brittle temperature $T_b$ is in a range of -80 to -35 °C.

3. The insulating composition of claim 1 or 2, wherein the insulating sample formed of the insulating composition has a flexural modulus of 50 to 1,200 MPa, measured at room temperature according to standard ASTM D790.

4. The insulating composition of claim 1 or 2, wherein, in the heterophasic polypropylene resin, rubbery propylene copolymer is dispersed in a crystalline polypropylene matrix.

5. The insulating composition of claim 4, wherein the crystalline polypropylene matrix comprises at least one of a propylene homopolymer and a propylene copolymer.

6. The insulating composition of claim 4, wherein the rubbery propylene copolymer comprises at least one comonomer selected from the group consisting of ethylene and $C_{4-12}$ alpha-olefins such as 1-butene, 1-pentene, 4-methyl-1-pentene, 1-hexene, 1-heptene, 1-octene, and the like.

7. The insulating composition of claim 1 or 2, wherein the heterophasic polypropylene resin has a melting point Tm of 140 to 170 °C and a melting enthalpy of 20 to 85 J/g, which are measured a differential scanning calorimeter (DSC).

8. The insulating composition of claim 1 or 2, wherein tensile strength is in a range of 0.7 to 3.0 kgf/mm$^2$ and Shore D hardness is in a range of 25 to 70 at a point at which an elongation is 5% when a tensile force is applied to a sample having a thickness of 1 mm at a rate of 200 mm/min, the sample being prepared by preheating the base resin at 180 °C for ten minutes, pressurizing the base resin to 20 MPa for ten minutes and then cooling the base resin.

9. The insulating composition of claim 1 or 2, further comprising 0.1 to 0.5 parts by weight of a nucleating agent, based on 100 parts by weight of the base resin.

10. The insulating composition of claim 1 or 2, further comprising 1 to 10 parts by weight of insulating oil, based on 100 parts by weight of the base resin.

11. The insulating composition of claim 1 or 2, further comprising 0.001 to 10% by weight of at least one additive selected from the group consisting of an antioxidant, an impact aid, a heat stabilizer, a nucleating agent and an acid scavenger, based on the total weight thereof.

12. The insulating composition of claim 1 or 2, wherein the base resin comprises 30 to 70 parts by weight of a polypropylene resin A and 70 to 30 parts by weight of a heterophasic polypropylene resin B, based on 100 parts by weight of the base resin, wherein in the heterophasic polypropylene resin B, a propylene copolymer is dispersed in a polypropylene matrix.

13. The insulating composition of claim 12, wherein the polypropylene resin A satisfying all of the following conditions a) to i) :

    a) a density of 0.87 to 0.92 g/cm$^3$, measured according to ISO 11883;

b) a melt flow rate (MFR) of 1.7 to 1.9 g/10 min, measured at 230 °C and under a load of 2.16 kg according to ISO 1133;

c) a tensile modulus of elasticity of 930 to 980 MPa, measured at a tension speed of 1 mm/min;

d) a tensile stress at yield of 22 to 27 MPa, measured at a tension speed of 50 mm/min;

e) a tensile strain at yield of 13 to 15%, measured at a tension speed of 50 mm/min;

f) Charpy impact strength of 1.8 to 2.1 $kJ/m^2$ at 0 °C and 5.5 to 6.5 $kJ/m^2$ at 23 °C;

g) a heat deflection temperature of 6.8 to 7.2 °C, measured at 0.45 MPa;

h) a Vicat softening point of 131 to 136 °C, measured at 50 °C/h and 10 N according to standard A50; and

i) Shore D hardness of 63 to 70, measured according to ISO 868.

14. The insulating composition of claim 12, wherein the heterophasic polypropylene resin B satisfies all of the following conditions a) to j:

a) a density of 0.86 to 0.90 $g/cm^3$, measured according to ISO 11883;

b) a melt flow rate (MFR) of 0.1 to 1.0 g/10 min, measured at 230 °C and under a load of 2.16 kg according to ISO 1133;

c) a tensile stress at break of 10 MPa or more, measured at a tension speed of 50 mm/min;

d) a tensile strain at break of 450% or more, measured at a tension speed of 50 mm/min;

e) flexural strength of 95 to 105 MPa;

f) notched izod impact strength of 6.8 to 7.2 $kJ/m^2$ at-40 °C;

g) a heat deflection temperature of 38 to 42 °C, measured at 0.45 MPa;

h) a Vicat softening point of 55 to 59 °C, measured at 50 °C/h and 10 N according to standard A50;

i) Shore D hardness of 25 to 35, measured according to ISO 868; and

j) a melting point 155 to 170 °C.

15. The insulating composition of claim 12, wherein the polypropylene resin A comprises a random propylene-ethylene copolymer containing an ethylene monomer in an amount of 1 to 10% by weight, based on the total weight of monomers, and

the polypropylene matrix contained in the heterophasic polypropylene resin B comprises a propylene homopolymer.

16. The insulating composition of claim 12, wherein the propylene copolymer contained in the heterophasic polypropylene resin B comprises polypropylene-ethylene rubber (PER) particles containing 20 to 50% by weight of an ethylene monomer, based on the total weight of monomers.

17. The insulating composition of claim 16, wherein an amount of the propylene copolymer is 60 to 80% by weight, based on the total weight of the heterophasic polypropylene resin B.

18. The insulating composition of claim 16, wherein the heterophasic polypropylene resin B has a melting enthalpy of 15 to 40 J/g, measured by a differential scanning calorimeter (DSC).

19. A power cable comprising:

a conductor;

an inner semiconducting layer surrounding the conductor; and

an insulating layer surrounding the inner semiconducting layer and formed of the insulating composition of claim 1 or 2.

20. The power cable of claim 19, wherein a thickness of the insulating layer of the power cable is 5.5 to 84.0 times $t_{min}$ expressed in the following Equation 3:

[Equation 3]

$$t_{min} = 2.5 \ Uo/\text{breakdown electric field for insulating samples,}$$

wherein Uo represents a reference voltage in a voltage test according to standard IEC 60840, and the breakdown electric field for insulating sample represents an electric field (kV/mm) according to a voltage applied when a probability of dielectric breakdown of the insulating samples is 63.2% when electrodes are brought into contact with both ends of each of the insulating samples and a voltage is applied thereto.

Fig. 1

Fig. 2

# EP 3 780 016 A1

## INTERNATIONAL SEARCH REPORT

| | |
|---|---|
| | International application No. |
| | PCT/KR2019/006715 |

**A. CLASSIFICATION OF SUBJECT MATTER**

*H01B 7/02(2006.01)i, H01B 7/17(2006.01)i, H01B 9/02(2006.01)i, H01B 13/00(2006.01)i, H01B 13/06(2006.01)i, H01B 3/30(2006.01)i*

According to International Patent Classification (IPC) or to both national classification and IPC

**B. FIELDS SEARCHED**

Minimum documentation searched (classification system followed by classification symbols)

H01B 7/02; H01B 12/14; H01B 13/00; H01B 3/28; H01B 3/30; H01B 9/00; H01B 9/02; H01B 7/17; H01B 13/06

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)

eKOMPASS (KIPO internal) & Keywords: power cable, insulating layer, polypropylene, heterophase polypropylene, brittleness temperature, xylene insolubility

**C. DOCUMENTS CONSIDERED TO BE RELEVANT**

| Category* | Citation of document, with indication, where appropriate, of the relevant passages | Relevant to claim No. |
|---|---|---|
| X | KR 10-2014-0134836 A (LS CABLE & SYSTEM LTD.) 25 November 2014 | 1-19 |
| | See claims 1-12; paragraphs [0006]-[0078]; the examples; tables 1-3. | |
| Y | | 20 |
| Y | KR 10-2014-0128585 A (LS CABLE & SYSTEM LTD.) 06 November 2014 | 20 |
| | See paragraphs [0138], [0142]. | |
| X | KR 10-2018-0001993 A (LS CABLE & SYSTEM LTD.) 05 January 2018 | 1-19 |
| | See claims 1, 9-18; and paragraphs [0086], [0090]. | |
| A | KR 10-2018-0013507 A (HUINNOVATION CO., LTD.) 07 February 2018 | 1-20 |
| | See the entire document. | |
| A | KR 10-0729135 B1 (INDUSTRY-ACADEMIC COOPERATION FOUNDATION GYEONGSANG NATIONAL UNIVERSITY) 14 June 2007 | 1-20 |
| | See the entire document. | |

| ☐ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 03 SEPTEMBER 2019 (03.09.2019) | **03 SEPTEMBER 2019 (03.09.2019)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

### INTERNATIONAL SEARCH REPORT
Information on patent family members

International application No.

**PCT/KR2019/006715**

| Patent document cited in search report | Publication date | Patent family member | Publication date |
|---|---|---|---|
| KR 10-2014-0134836 A | 25/11/2014 | KR 10-2003567 B1<br>KR 10-2014-0102407 A<br>KR 10-2014-0126993 A<br>KR 10-2019-0087345 A<br>WO 2014-126404 A1 | 24/07/2019<br>22/08/2014<br>03/11/2014<br>24/07/2019<br>21/08/2014 |
| KR 10-2014-0128585 A | 06/11/2014 | None | |
| KR 10-2018-0001993 A | 05/01/2018 | EP 3477662 A1<br>WO 2018-004210 A1 | 01/05/2019<br>04/01/2018 |
| KR 10-2018-0013507 A | 07/02/2018 | None | |
| KR 10-0729135 B1 | 14/06/2007 | US 2007-0136033 A1 | 14/06/2007 |